# EUROPEAN PATENT SPECIFICATION

(11) **EP 4 430 476 B1**
(45) Date of publication and mention of the grant of the patent: **12.08.2026**
(21) Application number: 21963648.7
(22) Date of filing: 12.11.2021
(51) Int. Cl.: G06F 11/34, G05B 23/02

(54) **METHOD AND APPARATUS OF MONITORING DRIVE**
VERFAHREN UND VORRICHTUNG ZUR ANTRIEBSÜBERWACHUNG
PROCÉDÉ ET APPAREIL DE SURVEILLANCE D'ENTRAÎNEMENT

(43) Date of publication of application: 18.09.2024
(73) Proprietor: ABB Beijing Drive Systems Co., Ltd., Chaoyang District, Beijing 100015 (CN)
(72) Inventor: CAO, Wenbin, Beijing 100026 (CN); ALKKIOMAKI, Olli, 00220 Helsinki (FI)
(74) Representative: Zimmermann & Partner Patentanwälte mbB
(86) International application number: PCT/CN2021/130449
(87) International publication number: WO 2023/082200

(56) References cited:
- EP-B1- 3 336 636
- CN-A- 102 495 549
- CN-A- 104 239 694
- CN-A- 106 203 836
- CN-A- 110 851 342
- CN-A- 111 191 838
- DE-T5- 112015 006 554
- US-A1- 2016 342 392
- US-A1- 2017 298 836

## Description

### FIELD

Embodiments of the present disclosure generally relate to the field of automatic control, and more particularly, to monitor a status of a drive.

### BACKGROUND

With development of industrial information technology and intelligent devices (e.g. drives in power industry or water plan industry) applications, it is required to automatically monitor statuses of devices such as the operation information thereof. In some circumstances, requirements for the operation of a device. For example, there will be a big problem if a generator in a power plant is suddenly out of operation. Moreover, it is sometimes not enough to just determine a current status of the device. In many situations, it is only required to predict the device status in a future. DE112015006554T5 relates to a remote monitoring device, a remote monitoring maintenance system, a remote monitoring method and a remote monitoring program for calculating a failure probability of a part contained in a monitoring target device. EP3336636B1 relates to a method and systems for modelling the fault probability of machinery. US2016342392A1 relates to a technique for monitoring the status of a monitoring target and detecting an abnormality.

### SUMMARY

The present invention provides a method, an apparatus, a computer-readable storage device, and a computer product of monitoring a drive.

In a first aspect, it is provided a method of monitoring a target drive according to claim 1.

In a second aspect, it is provided an apparatus of monitoring a target drive according to claim 5.

In a third aspect, it is provided a computer-readable storage device according to claim 8.

In a fourth aspect, it is provided a computer program product according to claim 9.

It is to be understood that the Summary is not intended to identify key or essential features of embodiments of the present disclosure, nor is it intended to be used to limit the scope of the present disclosure. Other features of the present disclosure will become readily comprehensible through the description below. The claimed subject matter is defined by the claims.

### DESCRIPTION OF DRAWINGS

Through the following detailed descriptions with reference to the accompanying drawings, the above and other objectives, features and advantages of the example embodiments disclosed herein will become more comprehensible. In the drawings, several example embodiments disclosed herein will be illustrated in an example and in a non-limiting manner, wherein:
FIG. 1 shows an environment in which the embodiments of the present disclosure can be implemented;
FIG. 2 shows a flowchart of a method of monitoring a target drive in accordance with embodiments of the present disclosure;
FIG. 3 shows a flowchart of a method of monitoring a target drive in accordance with other embodiments of the present disclosure;
FIG. 4 shows an illustrative diagram showing how a neural network model predicts a status of a drive based on a risk in accordance with embodiments of the present disclosure;
FIG. 5 shows an illustrative graph of a distribution of a plurality of risks and a predetermined distribution in accordance with embodiments of the present disclosure;
FIG. 6 shows a block diagram of an apparatus of monitoring a target drive in accordance with embodiments of the present disclosure;
FIG. 7 shows a block diagram of an apparatus of monitoring a target drive in accordance with other embodiments of the present disclosure; and
FIG. 8 shows a block diagram illustrating an electronics device in accordance with embodiments of the present disclosure.

Throughout the drawings, the same or similar reference symbols are used to indicate the same or similar elements.

### DETAILED DESCRIPTION OF EMBODIMENTS

Principles of the present disclosure will now be described with reference to several example embodiments shown in the drawings. Though example embodiments of the present disclosure are illustrated in the drawings, it is to be understood that the embodiments are described only to facilitate those skilled in the art in better understanding and thereby achieving the present disclosure, rather than to limit the scope of the disclosure in any manner.

The term "comprises" or "includes" and its variants are to be read as open terms that mean "includes, but is not limited to." The term "or" is to be read as "and/or" unless the context clearly indicates otherwise. The term "based on" is to be read as "based at least in part on." The term "being operable to" is to mean a function, an action, a motion or a state can be achieved by an operation induced by a user or an external mechanism. The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be included below. A definition of a term is consistent throughout the description unless the context clearly indicates otherwise.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

The functionality can be configured to perform an operation using, for instance, software, hardware, firmware, or the like. For example, the phrase "configured to" can refer to a logic circuit structure of a hardware element that is to implement the associated functionality. The phrase "configured to" can also refer to a logic circuit structure of a hardware element that is to implement the coding design of associated functionality of firmware or software. The term "module" refers to a structural element that can be implemented using any suitable hardware (e.g., a processor, among others), software (e.g., an application, among others), firmware, or any combination of hardware, software, and firmware. The term, "logic" encompasses any functionality for performing a task. For instance, each operation illustrated in the flowcharts corresponds to logic for performing that operation. An operation can be performed using, software, hardware, firmware, or the like. The terms, "component," "system," and the like may refer to computer-related entities, hardware, and software in execution, firmware, or combination thereof. A component may be a process running on a processor, an object, an executable, a program, a function, a subroutine, a computer, or a combination of software and hardware. The term, "processor," may refer to a hardware component, such as a processing unit of a computer system.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to disclosures containing only one such element, even when the same claim includes the introductory phrases "one or more" or "at least one" and indefinite articles such as "a" or "an." The same holds true for the use of definite articles.

Furthermore, the claimed subject matter may be implemented as a method, apparatus, or article of manufacture using standard programming and engineering techniques to produce software, firmware, hardware, or any combination thereof to control a computing device to implement the disclosed subject matter. Computer-readable storage media can include, but are not limited to, magnetic storage devices, e.g., hard disk, floppy disk, magnetic strips, optical disk, compact disk (CD), digital versatile disk (DVD), smart cards, flash memory devices, among others. In contrast, computer-readable media, i.e., not storage media, may additionally include communication media such as transmission media for wireless signals and the like.

The inventors notice that for millions of devices used in various modern industries ( e.g. drives used in power industry or water plan industry), although there may be lots of sensors monitoring the devices every moment, it is often not enough due to the demand of predicting statuses of the devices in a future. In addition, for those devices across different industries, it is hard to apply a conventional approach on a variety of devices in different industries and/or for different usages. For example, for a drive in water plan industry, the availability time is long and stable. However, for the same type of drive used in power industry, the availability time is short and unstable. Thus, the statuses of devices may be different even with the same operation information.

Therefore, by taking a drive in fleet drives as an example but without limitation, the present disclosure proposed a method of monitoring a target drive. It can also predict the statuses of the drives and identify an abnormal drive automatically. This facilitates the accuracy, efficiency and reliability for system in which the drives are used, and reduces the workload for monitoring the drives and determining the statuses of the drives. It is appreciated that the proposed method is also applicable for other devices.

In order to at least partially address the above and other potential problems, as well as to achieve at least some of the above advantages, the present invention provides a method of monitoring a target drive. In the method, two indexes are obtained, one index is associated with operation information of the target drive (referred as a first index), and the other index is associated with maintenance information of the target drive (referred as a second index). Based on the two obtained indexes, a risk of occurrence of a fault in the target drive is determined. Additionally, based on the determined risk, a status of the drive is determined according to a trained neural network model. The embodiments of the present disclosure will be described mainly by taking a drive as the target drive as an example. It should be understood that any other suitable type of drive are also possible.

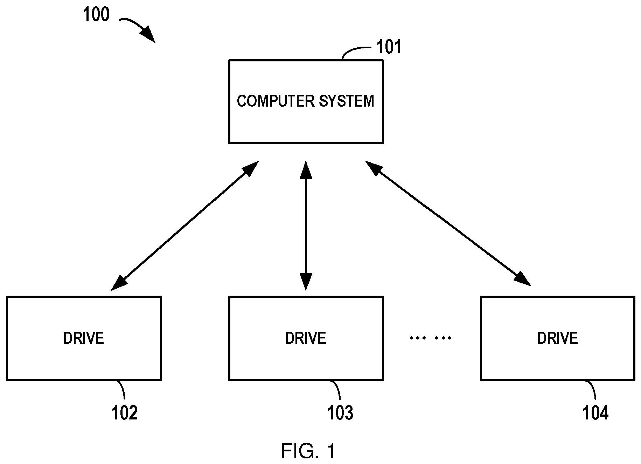

FIG.1 shows a block diagram of an example electronic device or a computer system 101 in which embodiments of the present disclosure can be implemented. The computer system 101 is only illustrated and is not intended to suggest any limitations as to scope of use or functionality of embodiments of the disclosure described herein.

As shown, the computer system 101 may be a general-purpose computing device. One or more of the drives 102, 103, 104 are the target drive(s) to be monitored. For ease of discussion, in the following descriptions, embodiments will be described with the drive 102 as the target drive. It is to be understood, however, that other drives 103/104 can also be selected to be monitored.

The drives 102-104 and the computer system 101 can communicate with each other via wired or wireless communication medium including, but not limited to, a bus or a communication network (not shown). Different sensors can be used to monitor the drives 102. Examples of the sensors include, but are not limited to, heat sensors, current sensors, voltage sensors, and the like.

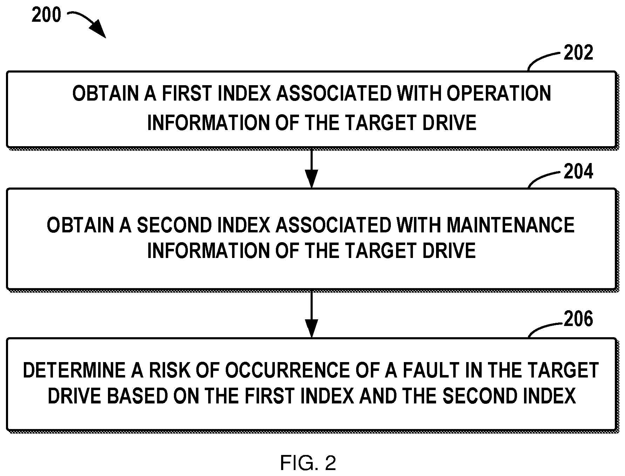

FIG. 2 is a flowchart of a method 200 of monitoring a target drive in accordance with the present invention.

At block 202, obtaining a first index associated with operation information of the target drive. The operation information includes some parameters of the target drive. These parameters describe various aspects of operating levels or conditions of the target drive. By way of example but no limitation, the examples of the operation information may be an unscheduled downtime (e.g. a length of time that a drive suddenly shutting down), a normal downtime (e.g. a length of time that a drive shutting down as planned), a charging time of the target drive, a discharging time of the target drive, a duration from the target drive being abnormal to normal, a number of days that the target drive is in operation, a number of fault in the target drive in a month, a total number of faults among total drives in a month, and the like.

According to the invention, obtaining the first index comprises: for each of a plurality of drives including the target drive, determining the following of the drive during a period of time: a unplanned downtime during which the drive is out of operation, and an availability time during which the drive is in operation or standby, a first number of faults occurred in the drive. During the period of time, determining a second number of faults occurred in the plurality of drives. Generating the first index based on the unplanned downtime, the availability time, the first number and the second number.

In some embodiments, furthermore, the availability time may be a sum of operation time, charging time (e.g. time since the drive 102 is powered up), and the discharging time (e.g. time since the drive 102 is powered down). The unplanned downtime may be obtained by subtracting the availability time and normal downtime from the period of time.

According to the invention, generating the first index comprises: determining a first entropy based on the first number and the second number, the first entropy indicating a uncertainty level of occurrence of the fault according to the operation information; determining a first proportion of the unplanned downtime and the availability time; and generating the first index based on the first entropy and the first proportion.

The first entropy and the first proportion can be determined as below: ${p}_{1} = \frac{{n}_{1}}{{n}_{2}}$ ${e}_{1} = \frac{{t}_{ud}}{{t}_{at}} ∗ log \left({p}_{1}\right)$ where *p*₁ represents the first proportion; *n*₁ represents the first number; *n*₂ represents the second number; *t_{ud}* represents the unplanned downtime; *t*ₐₜ represents the availability time; *e*₁ represents the first entropy.

In some embodiments, furthermore, the unplanned downtime may be an accumulated unplanned downtime for several periods of time or a significant long period of time (e.g. two months). Similarly, the availability time may be an accumulated availability downtime for several periods of time or a significant long period of time (e.g. two months). As such, the operation information of the drive 102 is quantized into numerical value indicating a uncertainty level of occurrence of the fault in a more comprehensive way. Obviously, it would facilitate the prediction of the status and make the predicted results more accurate, because the key operation parameters of the drive are considered in the first index.

At block 204, obtaining a second index associated with maintenance information of the target drive. In some embodiments, the maintenance information may be obtained from a database (e.g. SQL database) from the maintenance services providers. One example of the maintenance information is a drive quality guarantee time (e.g. the length of warranty time of the drive), which may be provided by the manufacture company.

In some embodiments, obtaining the second index comprises: for each of a plurality of drives including the target drive, determining the following of the drive during a period of time: a running time during which the drive is in operation, an expected lifetime during which the drive is planned to be used. Determining an average downtime during which the plurality of drives are out of operation. Generating the second index based on the running time, the expected lifetime, and the average downtime.

In some embodiments, furthermore, the expected lifetime may be the quality guarantee time (such as a length of warranty time of the drive 102). The running time may be the number of days of the drive 102 in operation. In another embodiment, the running time may be an accumulated running time for several periods of time or a significant long period of time (e.g. two months).

In some embodiments, generating the second index comprises: determining a second entropy based on the running time and the average downtime, the second entropy indicating a uncertainty level of occurrence of the fault according to the maintenance information; determining a second proportion based on the running time and the expected lifetime; and generating the second index based on the second entropy and the second proportion.

The second entropy and the second proportion can be determined as below: ${p}_{2} = \frac{{t}_{rt}}{{t}_{el}}$ ${e}_{2} = {p}_{2} ∗ log \left(\frac{{t}_{ad}}{{t}_{rt}}\right)$ where *p*₂ represents the second proportion; *tᵣₜ* represents the running time; *tₑₗ* represents the expected lifetime; *t_{ad}* represents the average downtime; *t*ᵣₜ represents the running time; *e*₂ represents the second entropy.

In some embodiments, furthermore, the running time may be an accumulated running time for several periods of time or a significant long period of time (e.g. two months). As such, the maintenance information of the drive 102 is quantized into a numerical value indicating a uncertainty level of occurrence of the fault in a more comprehensive way. Obviously, it would also facilitate improving the accuracy of the prediction of the status of the target drive (e.g. the drive 102). Accordingly, it provides at least one of benefits such as the improved efficiency and reliability and the reduced workloads, as mentioned above.

At block 206, determining a risk of occurrence of a fault in the target drive based on the first index and the second index. Since the first index is in a form of numerical value, as well as the second index is in the same form, there is a convenient and effective way of determining the risk. That is, to make an addition of the first index and the second index.

In general, the risk of the target drive may be determined with a function represented as *f*(*n*₁, *n*₂, *t_{ud}*, *t*ₐₜ, *tᵣₜ*, *tₑₗ*, *t_{ad}*), wherein for each of a plurality of drives including the target drive, *n*₁ represents a number of faults occurred in the drive, *n*₂ represents a number of faults occurred in the plurality of drives during the period of time, *t_{ud}* represents a unplanned downtime during which the drive is out of operation, *t*ₐₜ represents an availability time during which the drive is in operation or standby, *tᵣₜ* represents an running time which the drive is in operation, *tₑₗ* represents an expected lifetime during which the drive is planned to be used; *t_{ad}* represents an average downtime during which the plurality of drives are out of operation. The detailed operations of the function *f*(*n*₁, *n*₂, *t_{ud}*, *t*ₐₜ, *tᵣₜ*, *tₑₗ*, *t_{ad}*) are referenced by the formulas (1) to (4).

It would be appreciated that the first index is used to convert the influence of faults in the drive into a numerical value. Since the unplanned downtime is caused by the faults, in a conventional way, the number of the faults and the unplanned downtime are multiplied directly, and the resulting value would be amplified, the error during computing would be amplified accordingly. The introduction of the first index will reduce the impact of the amplification and accompany error, so that a more comprehensive value indicating the uncertainty level of occurrence of the fault is determined.

In addition, the second index is used to adjust the error. Since the normal downtime (e.g. downtime as planned) is controlled by customer (an entity who used the drive). If the customer stops the drive for a long time in purpose, the operation efficiency of the drive is low and the expected life should increase. In such circumstance, the second index plays a role to reduce the influence of the low operation efficiency.

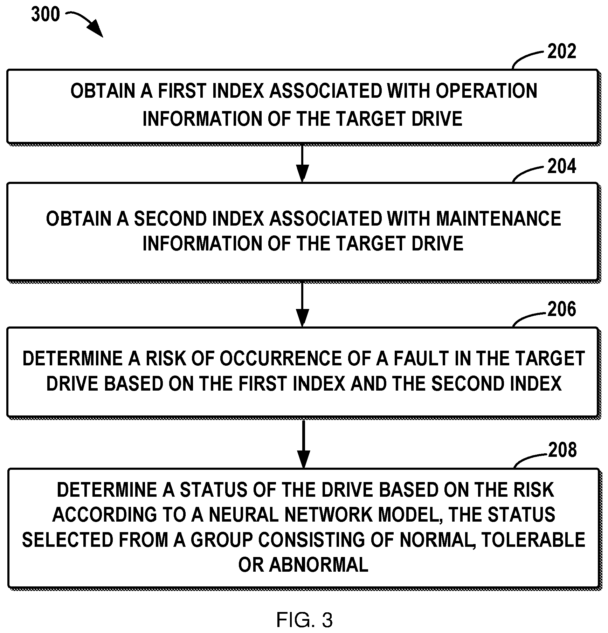

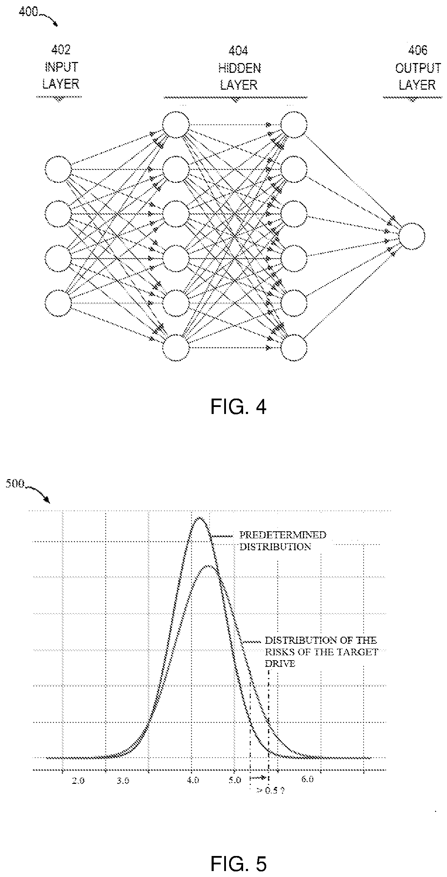

FIG. 3 shows a flowchart of a method 300 of monitoring a target drive in accordance with other embodiments of the present disclosure. As shown, the method 300 comprises block 208 in addition to blocks 202, 204 and 206. The detailed description of blocks 202-206 is not described there for brevity. At block 208 (continued with block 206), determining a status of the drive based on the risk according to a neural network model (as shown in FIG. 4, which will be described later), the status selected from a group consisting of normal, tolerable or abnormal. As can be understood, the normal status means the risk of occurrence of the fault is low. The tolerable status means the risk of occurrence of the fault is of an average level. In tolerable status, the drive may be in debugging or stops working for some time. The abnormal status means the risk of occurrence of the fault is high. In abnormal status, the drive may operate with heavy load and frequent failures happened or would happen, it is necessary to contact the service department in advance to check and maintain the drive. Thus, any unplanned shutdown can be avoided and loss can be reduced, e.g. eliminating the shutdown loss caused by the abnormal drive by replacing it in advance.

FIG. 4 shows an illustrative diagram showing how a neural network model 400 predicts a status of a drive based on a risk in accordance with embodiments of the present disclosure. The neural network model 400 includes an input layer 402 for receiving data (e.g. the determined risk of block 206) as input. In some embodiments, the input layer 402 may also receive the first index and the second index directly. The neural network model 400 also includes a hidden layer 404, the received data is encoded in hidden layer 404 and a possibility indicating the status of the drive is generated. The neural network model 400 includes an output layer 406 as well. In the output layer 406, according to the generated possibility, the status is selected from a group consisting of normal, tolerable or abnormal.

In some embodiments, the neural network model may be trained over a training set comprising a first set of indexes associated with the operation information of drives preselected for training, a second set of indexes associated with the maintenance information of the drives, and a total number of occurrences of faults in the drives. Furthermore, in some embodiments, the neural network model may be a KNN model or a logic regression model. It is understood that other models using machine learning algorithm are also applicable.

In order to train the neural network model, for the first set, for each of the selected drives for training, each index is determined with the same way of block 202 of FIG. 2. The resulting indexes are grouped into the first set. For the second set, for each of the selected drives for training, each index is determined with the same way of block 204 of FIG. 2. The resulting indexes are grouped into the second set. The drives selected for training are from various industries such as water plan, power plant, etc. In general, the neural network model learns the characteristics (e.g. the parameters) of multiple drives across different industries, which facilitates the accuracy of the prediction of the target drive. Since the characteristics of a drive in a particular industry are learned by the neural network model, it has an ability to identify the abnormal drive in a particular industry among drives of different industries.

In some embodiments, the neural network model can be retrained. The neural network model is retrained in accordance with a determination that a difference between a distribution of a plurality of risks and a predetermined distribution exceeds a threshold (as shown in FIG. 5, which will be described later). In some embodiments, the plurality of risks are determined by the following processes: a) for the target drive, obtaining the operation information and the maintenance information for a plurality of periods of time or a long period of time ( such as a month); b) for each of the plurality of periods of time, determining each respective risk during each periods of time; or c) for the long period of time, segmenting the long period of time into several time intervals, and for each time interval, determining each respective risk during each time interval; d) collecting each respective risk to obtain the plurality of risks.

FIG. 5 shows an illustrative graph of a distribution of a plurality of risks and a predetermined distribution in accordance with embodiments of the present disclosure. As can be seen, the distribution may be a Gaussian distribution. The difference may be a difference between variance of the Gaussian distribution of the plurality of risks and the variance of the predetermined Gaussian distribution. When the difference is larger than a threshold, a retraining action is issued and the neural network model will be retrained over an updated training set. By this way, the neural network model is retrained and it learns updated characteristics of multiple drives across different industries according to the updated training set. In some embodiments, when the difference is close to the threshold, although the retraining action is not issued, the prediction result is judged to be less trustable. Such less trustable prediction results may be provided for the customers (e.g. the entity who monitored the drive or the entity who used the drive) for reference.

In general, by implementing the methods 200 or 300, several advantages may be provided. First, based on the predicted status, if the status of the drive is abnormal, the unplanned downtime can be avoided by taking actions in advance. Second, by quantizing the operation information and maintenance information into the first index and the second index, it provides a more comprehensive way to represent the potential risks that a fault to be occurred. Third, it can apply novelty approaches (i.e. the methods 200 and 300) on a variety of drives in different industries and/or for different usages. By using the trained neural network model, the characteristics of parameters of multiple drives across different industries are learned. Forth, the neural network model is retrained if the usages of the drives changes greatly, thus the predicted results can keep up to date. Thus, based on the above-identified advantages, it can improve the overall performance of the system in which drives are used, such as the accuracy, efficiency and reliability of the system.

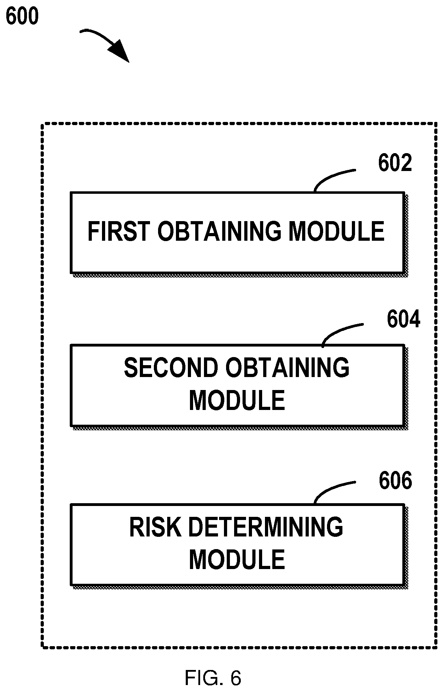

FIG. 6 shows a block diagram of an apparatus 600 of monitoring a target drive in accordance with the present invention. The apparatus 600 comprises a first obtaining module 602 configured to obtain a first index associated with operation information of the target drive. According to the invention, obtaining the first index comprises: for each of a plurality of drives including the target drive, determining the following of the drive during a period of time: a unplanned downtime during which the drive is out of operation, and an availability time during which the drive is in operation or standby, a first number of faults occurred in the drive. During the period of time, determining a second number of faults occurred in the plurality of drives. Generating the first index based on the unplanned downtime, the availability time, the first number and the second number.

According to the invention, generating the first index comprises: determining a first entropy based on the first number and the second number, the first entropy indicating a uncertainty level of occurrence of the fault according to the operation information; determining a first proportion of the unplanned downtime and the availability time; and generating the first index based on the first entropy and the first proportion.

The apparatus 600 comprises a second obtaining module 604 configured to obtain a second index associated with maintenance information of the target drive. In some embodiments, obtaining the second index comprises: for each of a plurality of drives including the target drive, determining the following of the drive during a period of time: a running downtime during which the drive is in operation, an expected lifetime during which the drive is planned to be used. Determining an average downtime during which the plurality of drives are out of operation. Generating the second index based on the running time, the expected lifetime, and the average downtime.

In some embodiments, generating the second index comprises: determining a second entropy based on the running time and the average downtime, the second entropy indicating a uncertainty level of occurrence of the fault according to the maintenance information; determining a second proportion based on the running time and the expected lifetime; and generating the second index based on the second entropy and the second proportion.

The apparatus 600 comprises a risk determining module 606 configured to determine a risk of occurrence of a fault in the target drive based on the first index and the second index. The detailed implementation is referenced with the description of the method 200. For simplicity, it is not described herein.

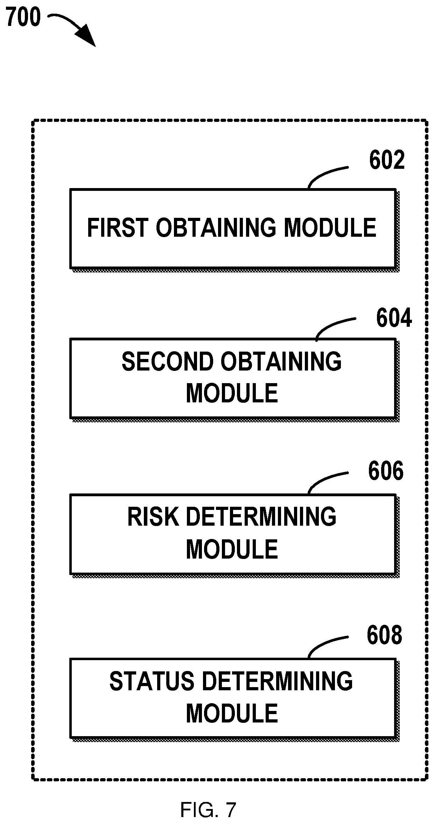

FIG. 7 shows a block diagram of an apparatus 700 of monitoring a target drive in accordance with other embodiments of the present disclosure. As shown, the apparatus 700 comprises a status determining module 608 in addition to modules 602, 604 and 606. The detailed description of modules 602-606 is not described there for brevity. The status determining module 608 is configured to determine a status of the drive based on the risk according to a neural network model, the status selected from a group consisting of normal, tolerable or abnormal. In some embodiments, the neural network model may be trained over a training set comprising a first set of indexes associated with the operation information of drives preselected for training, a second set of indexes associated with the maintenance information of the drives, and a total number of occurrences of faults in the drives.

In some embodiments, the neural network model can be retrained. The neural network model is retrained in accordance with a determination that a difference between a distribution of a plurality of risks and a predetermined distribution exceeds a threshold. In further embodiments, the plurality of risks are from a plurality of periods of time, for each of the plurality of periods of time, a respective risk of the target drive is determined.

It is appreciated that by quantizing the operation information and maintenance information into the first index and the second index, the apparatuses 600 or 700 provide a more comprehensive way to represent the potential risks to be occurred. Thus processing the indexes becomes easier and efficient. Different usages of drives across different industries are taken into consideration to make more precise predicted results.

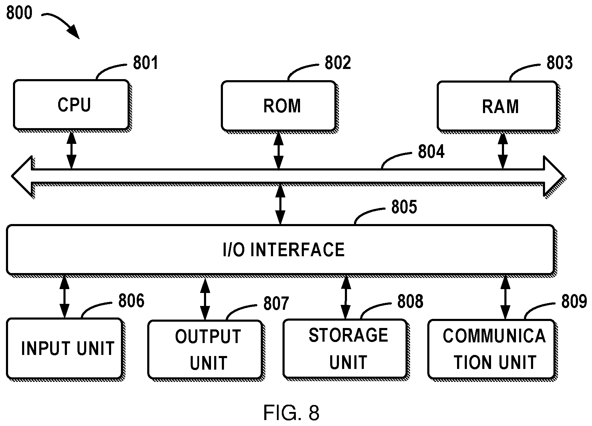

FIG. 8 schematically illustrates a block diagram of an electronics device 800 in accordance with embodiments of the present disclosure. As indicated, the device 800 includes a central processing unit (CPU) 801, which can execute various appropriate actions and processing based on the computer program instructions stored in a read-only memory (ROM) 802 or the computer program instructions loaded into a random access memory (RAM) 803 from a storage unit 808. The RAM 803 also stores all kinds of programs and data required by operating the storage device 800. CPU 801, ROM 802 and RAM 803 are connected to each other via a bus 804, to which an input/output (I/O) interface 805 is also connected.

A plurality of components in the device 800 are connected to the I/O interface 805, comprising: an input unit 806, such as a keyboard, a mouse and the like; an output unit 807, such as various types of displays, loudspeakers and the like; a storage unit 808, such as a storage disk, an optical disk and the like; and a communication unit 809, such as a network card, a modem, a wireless communication transceiver and the like. The communication unit 809 allows the device 800 to exchange information/data with other devices through computer networks such as Internet and/or various telecommunication networks.

Each procedure and processing described above, such as the method 200, can be executed by a processing unit 801. For example, in some embodiments, the methods 200 or 300 can be implemented as computer software programs, which are tangibly included in a machine-readable medium, such as a storage unit 808. In some embodiments, the computer program can be partially or completely loaded and/or installed to the device 800 via the ROM 802 and/or the communication unit 809. When the computer program is loaded to the RAM 803 and executed by the CPU 801, one or more steps of the above described methods 200 or 300 are implemented. Alternatively, in other embodiments, the CPU 801 may also be configured in any proper manner to implement the above process/method.

The present disclosure may be a method, a device, a system and/or a computer program product. The computer program product can include a computer-readable storage medium loaded with computer-readable program instructions thereon for executing various aspects of the present disclosure.

The computer readable storage medium can be a tangible device that can retain and store instructions for use by an instruction execution device. The computer readable storage medium may be, for example, but not limited to, an electronic storage device, a magnetic storage device, an optical storage device, an electromagnetic storage device, a semiconductor storage device, or any suitable combination thereof. More specific examples (a non-exhaustive list) of the computer readable storage medium would include: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination thereof. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium, or downloaded to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, by means of state information of the computer readable program instructions, an electronic circuitry including, for example, programmable logic circuitry, field-programmable gate arrays (FPGA), or programmable logic arrays (PLA) can be personalized to execute the computer readable program instructions, thereby implementing various aspects of the present disclosure.

Aspects of the present disclosure are described herein with reference to flowchart and/or block diagrams of methods, apparatus (systems), and computer program products according to embodiments of the present disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which are executed via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which are executed on the computer, other programmable apparatus, or other device implement the functions/acts specified in the flowchart and/or block diagram block or blocks.

The flowchart and block diagrams illustrate the architecture, functionality, and operation of possible implementations of systems, methods and computer program products according to various embodiments of the present disclosure. In this regard, each block in the flowchart or block diagrams may represent a module, snippet, or portion of codes, which comprises one or more executable instructions for implementing the specified logical function(s). In some alternative implementations, the functions noted in the block may be implemented in an order different from those illustrated in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or by combinations of special purpose hardware and computer instructions.

## Claims

1. A computer-implemented method (200, 300) of monitoring a target drive, comprising:
Obtaining (202) a first index associated with operation information of the target drive, wherein obtaining the first index comprises:
for each of a plurality of drives including the target drive, determining the following of the drive during a period of time:
a unplanned downtime during which the drive is out of operation,
an availability time during which the drive is in operation or standby,
a first number of faults occurred in the drive,
determining a second number of faults occurred in the plurality of drives during the period of time; and
generating the first index based on the unplanned downtime, the availability time, the first number and the second number, wherein generating the first index comprises:
determining a first entropy based on the first number and the second number, the first entropy indicating a uncertainty level of occurrence of the fault according to the operation information;
determining a first proportion of the unplanned downtime and the availability time; and
generating the first index based on the first entropy and the first proportion;
obtaining (204) a second index associated with maintenance information of the target drive; and
determining (206) a risk of occurrence of a fault in the target drive based on the first index and the second index.

2. The method according to claim 1, wherein obtaining the second index comprises:
for each of a plurality of drives including the target drive, determining the following of the drive during a period of time:
a running time during which the drive is in operation,
an expected lifetime during which the drive is planned to be used, determining an average downtime during which the plurality of drives are out of operation; and
generating the second index based on the running time, the expected lifetime, and the average downtime, wherein generating the second index comprises:
determining a second entropy based on the running time and the average downtime, the second entropy indicating a uncertainty level of occurrence of the fault according to the maintenance information;
determining a second proportion based on the running time and the expected lifetime; and
generating the second index based on the second entropy and the second proportion.

3. The method according to claim 1, comprises:
Determining (208) a status of the target drive based on the risk according to a neural network model, the status selected from a group consisting of normal, tolerable or abnormal.

4. The method according to claim 3, wherein the neural network model is trained over a training set comprising:
a first set of indexes associated with the operation information of drives preselected for training;
a second set of indexes associated with the maintenance information of the drives; and
a total number of occurrences of faults in the drives.

5. An apparatus (600, 700) of monitoring a target drive, comprising:
a first obtaining module (602) configured to obtain a first index associated with operation information of the target drive, wherein obtaining the first index comprises:
for each of a plurality of drives including the target drive, determining the following of the drive during a period of time:
a unplanned downtime during which the drive is out of operation,
an availability time during which the drive is in operation or standby,
a first number of faults occurred in the drive,
determining a second number of faults occurred in the plurality of drives during the period of time; and
generating the first index based on the unplanned downtime, the availability time, the first number and the second number, wherein generating the first index comprises:
determining a first entropy based on the first number and the second number, the first entropy indicating a uncertainty level of occurrence of the fault according to the operation information;
determining a first proportion of the unplanned downtime and the availability time; and
generating the first index based on the first entropy and the first proportion;
a second obtaining module (604) configured to obtain a second index associated with maintenance information of the target drive; and
a risk determining module (606) configured to determine a risk of occurrence of a fault in the target drive based on the first index and the second index.

6. The apparatus according to claim 5, wherein obtaining the second index comprises:
for each of a plurality of drives including the target drive, determining the following of the drive during a period of time:
a running time during which the drive is in operation,
an expected lifetime during which the drive is planned to be used,
determining an average downtime during which the plurality of drives are out of operation; and
generating the second index based on the running time, the expected lifetime, and the average downtime, wherein generating the second index comprises:
determining a second entropy based on the running time and the average downtime, the second entropy indicating a uncertainty level of occurrence of the fault according to the maintenance information;
determining a second proportion based on the running time and the expected lifetime; and
generating the second index based on the second entropy and the second proportion.

7. The apparatus according to claim 5, comprises:
a status determining module (608) configured to determine a status of the target drive based on the risk according to a neural network model, the status selected from a group consisting of normal, tolerable or abnormal.

8. A computer-readable storage device having instructions for execution by a processor of a computer to cause the processor to perform a method according claim 1.

9. A computer program product comprising one or more computer instructions, when the one or more computer instructions are executed by a processor, causes the processor to perform a method according claim 1.

## Patentansprüche

1. Computerimplementiertes Verfahren (200, 300) zum Überwachen eines Zielantriebs, umfassend:
Erhalten (202) eines ersten Index, der mit Betriebsinformationen des Zielantriebs verknüpft ist, wobei das Erhalten des ersten Index umfasst:
für jeden einer Vielzahl von Antrieben einschließlich des Zielantriebs, Bestimmen des Folgenden des Antriebs während eines Zeitraums:
einer ungeplanten Ausfallzeit, während der der Antrieb außer Betrieb ist,
einer Verfügbarkeitszeit, während der der Antrieb in Betrieb oder im Standby ist,
einer ersten Anzahl von Fehlern, die im Antrieb aufgetreten sind,
Bestimmen einer zweiten Anzahl von Fehlern, die in der Vielzahl von Antrieben während des Zeitraums aufgetreten sind; und
Erzeugen des ersten Index basierend auf der ungeplanten Ausfallzeit, der Verfügbarkeitszeit, der ersten Anzahl und der zweiten Anzahl, wobei das Erzeugen des ersten Index umfasst:
Bestimmen einer ersten Entropie basierend auf der ersten Anzahl und der zweiten Anzahl, wobei die erste Entropie einen Unsicherheitsgrad des Auftretens des Fehlers gemäß den Betriebsinformationen angibt;
Bestimmen eines ersten Anteils der ungeplanten Ausfallzeit und der Verfügbarkeitszeit; und
Erzeugen des ersten Index basierend auf der ersten Entropie und dem ersten Anteil;
Erhalten (204) eines zweiten Index, der mit Wartungsinformationen des Zielantriebs verknüpft ist; und
Bestimmen (206) eines Risikos des Auftretens eines Fehlers im Zielantrieb basierend auf dem ersten Index und dem zweiten Index.

2. Verfahren nach Anspruch 1, wobei das Erhalten des zweiten Index umfasst:
für jeden einer Vielzahl von Antrieben einschließlich des Zielantriebs, Bestimmen des Folgenden des Antriebs während eines Zeitraums:
einer Laufzeit, während der der Antrieb in Betrieb ist, einer erwarteten Lebensdauer, während der die Verwendung des Antriebs geplant ist, Bestimmen einer durchschnittlichen Ausfallzeit, während der die Vielzahl von Antrieben außer Betrieb sind; und
Erzeugen des zweiten Index basierend auf der Laufzeit, der erwarteten Lebensdauer und der durchschnittlichen Ausfallzeit, wobei das Erzeugen des zweiten Index umfasst:
Bestimmen einer zweiten Entropie basierend auf der Laufzeit und der durchschnittlichen Ausfallzeit, wobei die zweite Entropie einen Unsicherheitsgrad des Auftretens des Fehlers gemäß den Wartungsinformationen angibt;
Bestimmen eines zweiten Anteils basierend auf der Laufzeit und der erwarteten Lebensdauer; und
Erzeugen des zweiten Index basierend auf der zweiten Entropie und dem zweiten Anteil.

3. Verfahren nach Anspruch 1, umfassend:
Bestimmen (208) eines Status des Zielantriebs basierend auf dem Risiko gemäß einem neuronalen Netzwerkmodell, wobei der Status aus einer Gruppe ausgewählt wird, die aus normal, tolerierbar oder anomal besteht.

4. Verfahren nach Anspruch 3, wobei das neuronale Netzwerkmodell über einen Trainingssatz trainiert wird, der umfasst:
einen ersten Satz von Indizes, die mit den Betriebsinformationen von für das Training vorausgewählten Antrieben verknüpft sind;
einen zweiten Satz von Indizes, die mit den Wartungsinformationen der Antriebe verknüpft sind; und
eine Gesamtanzahl von Vorkommnissen von Fehlern in den Antrieben.

5. Einrichtung (600, 700) zum Überwachen eines Zielantriebs, umfassend:
Ein erstes Erhaltungsmodul (602), das dazu ausgelegt ist, einen ersten Index zu erhalten, der mit Betriebsinformationen des Zielantriebs verknüpft ist, wobei das Erhalten des ersten Index umfasst:
für jeden einer Vielzahl von Antrieben einschließlich des Zielantriebs, Bestimmen des Folgenden des Antriebs während eines Zeitraums:
einer ungeplanten Ausfallzeit, während der der Antrieb außer Betrieb ist,
einer Verfügbarkeitszeit, während der der Antrieb in Betrieb oder im Standby ist,
einer ersten Anzahl von Fehlern, die im Antrieb aufgetreten sind,
Bestimmen einer zweiten Anzahl von Fehlern, die in der Vielzahl von Antrieben während des Zeitraums aufgetreten sind; und
Erzeugen des ersten Index basierend auf der ungeplanten Ausfallzeit, der Verfügbarkeitszeit, der ersten Anzahl und der zweiten Anzahl, wobei das Erzeugen des ersten Index umfasst:
Bestimmen einer ersten Entropie basierend auf der ersten Anzahl und der zweiten Anzahl, wobei die erste Entropie einen Unsicherheitsgrad des Auftretens des Fehlers gemäß den Betriebsinformationen angibt;
Bestimmen eines ersten Anteils der ungeplanten Ausfallzeit und der Verfügbarkeitszeit; und
Erzeugen des ersten Index basierend auf der ersten Entropie und dem ersten Anteil;
ein zweites Erhaltungsmodul (604), das dazu ausgelegt ist, einen zweiten Index zu erhalten, der mit Wartungsinformationen des Zielantriebs verknüpft ist; und
ein Risikobestimmungsmodul (606), das dazu ausgelegt ist, ein Risiko des Auftretens eines Fehlers im Zielantrieb basierend auf dem ersten Index und dem zweiten Index zu bestimmen.

6. Einrichtung nach Anspruch 5, wobei das Erhalten des zweiten Index umfasst:
für jeden einer Vielzahl von Antrieben einschließlich des Zielantriebs, Bestimmen des Folgenden des Antriebs während eines Zeitraums:
einer Laufzeit, während der der Antrieb in Betrieb ist, einer erwarteten Lebensdauer, während der die Verwendung des Antriebs geplant ist,
Bestimmen einer durchschnittlichen Ausfallzeit, während der die Vielzahl von Antrieben außer Betrieb sind; und
Erzeugen des zweiten Index basierend auf der Laufzeit, der erwarteten Lebensdauer und der durchschnittlichen Ausfallzeit, wobei das Erzeugen des zweiten Index umfasst:
Bestimmen einer zweiten Entropie basierend auf der Laufzeit und der durchschnittlichen Ausfallzeit, wobei die zweite Entropie einen Unsicherheitsgrad des Auftretens des Fehlers gemäß den Wartungsinformationen angibt;
Bestimmen eines zweiten Anteils basierend auf der Laufzeit und der erwarteten Lebensdauer; und
Erzeugen des zweiten Index basierend auf der zweiten Entropie und dem zweiten Anteil.

7. Einrichtung nach Anspruch 5, umfassend:
ein Statusbestimmungsmodul (608), das dazu ausgelegt ist, einen Status des Zielantriebs zu bestimmen, basierend auf dem Risiko gemäß einem neuronalen Netzwerkmodell, wobei der Status aus einer Gruppe ausgewählt wird, die aus normal, tolerierbar oder anomal besteht.

8. Computerlesbare Speichervorrichtung mit Anweisungen zur Ausführung durch einen Prozessor eines Computers, um den Prozessor zu veranlassen, ein Verfahren nach Anspruch 1 durchzuführen.

9. Computerprogrammprodukt, das eine oder mehrere Computeranweisungen umfasst, das bewirkt, wenn die ein oder mehreren Computeranweisungen durch einen Prozessor ausgeführt werden, dass der Prozessor ein Verfahren nach Anspruch 1 durchführt.

## Revendications

1. Procédé (200, 300) mis en œuvre par ordinateur de surveillance d'un pilote cible, comprenant :
l'obtention (202) d'un premier indice associé à des informations de fonctionnement du pilote cible, dans lequel l'obtention du premier indice comprend :
pour chacun d'une pluralité de pilotes incluant le pilote cible, la détermination de l'état suivant du pilote pendant une période :
un temps d'arrêt non planifié pendant lequel le pilote est hors service,
une durée de disponibilité pendant laquelle le pilote est en fonctionnement ou en veille,
un premier nombre de défauts survenus dans le pilote, la détermination d'un second nombre de défauts survenus dans la pluralité de pilotes pendant la période ; et
la génération du premier indice sur la base du temps d'arrêt non planifié, de la durée de disponibilité, du premier nombre et du second nombre, dans lequel la génération du premier indice comprend :
la détermination d'une première entropie sur la base du premier nombre et du second nombre, la première entropie indiquant un niveau d'incertitude de survenue du défaut en fonction des informations de fonctionnement,
la détermination d'une première proportion du temps d'arrêt non planifié et de la durée de disponibilité ; et
la génération du premier indice sur la base de la première entropie et de la première proportion,
l'obtention (204) d'un second indice associé à des informations de maintenance du pilote cible ; et
la détermination (206) d'un risque de survenue d'un défaut dans le pilote cible sur la base du premier indice et du second indice.

2. Procédé selon la revendication 1, dans lequel l'obtention du second indice comprend :
pour chacun d'une pluralité de pilotes incluant le pilote cible, la détermination de l'état suivant du pilote pendant une période :
une durée de fonctionnement pendant laquelle le pilote est en fonctionnement,
une durée de vie prévue pendant laquelle le pilote est prévu pour être utilisé, déterminant un temps d'arrêt moyen pendant lequel la pluralité de pilotes sont hors service ; et
la génération du second indice à partir du temps de fonctionnement, de la durée de vie prévue et du temps d'arrêt moyen, la génération du second indice comprenant :
la détermination d'une seconde entropie sur la base de la durée de fonctionnement et du temps d'arrêt moyen, la seconde entropie indiquant un niveau d'incertitude de survenue du défaut en fonction des informations de maintenance ;
la détermination d'une seconde proportion sur la base de la durée de fonctionnement et de la durée de vie prévue ; et
la génération du second indice sur la base de la seconde entropie et de la seconde proportion.

3. Procédé selon la revendication 1, comprenant :
la détermination (208) d'un état du pilote cible sur la base du risque conformément à un modèle de réseau neuronal, l'état étant sélectionné dans un groupe constitué des état suivants : normal, tolérable ou anormal.

4. Procédé selon la revendication 3, dans lequel le modèle de réseau neuronal est entraîné sur un ensemble d'entraînement comprenant :
un premier ensemble d'indices associé aux informations de fonctionnement de pilotes présélectionnés pour l'entraînement ;
un second ensemble d'indices associé aux informations de maintenance des pilotes ; et
un nombre total d'occurrences de défauts dans les pilotes.

5. Appareil (600, 700) de surveillance d'un pilote cible, comprenant :
un premier module d'obtention (602) configuré pour obtenir un premier indice associé à des informations de fonctionnement du pilote cible, dans lequel l'obtention du premier indice comprend :
pour chacun d'une pluralité de pilotes incluant le pilote cible, la détermination de l'état suivant du pilote pendant une période :
un temps d'arrêt non planifié pendant lequel le pilote est hors service,
une durée de disponibilité pendant laquelle le pilote est en fonctionnement ou en veille,
un premier nombre de défauts survenus dans le pilote, la détermination d'un second nombre de défauts survenus dans la pluralité de pilotes pendant la période ; et
la génération du premier indice sur la base du temps d'arrêt non planifié, de la durée de disponibilité, du premier nombre et du second nombre, dans lequel la génération du premier indice comprend :
la détermination d'une première entropie sur la base du premier nombre et du second nombre, la première entropie indiquant un niveau d'incertitude de survenue du défaut en fonction des informations de fonctionnement,
la détermination d'une première proportion du temps d'arrêt non planifié et de la durée de disponibilité ; et
la génération du premier indice sur la base de la première entropie et de la première proportion,
un second module d'obtention (604) configuré pour obtenir un second indice associé à des informations de maintenance du pilote cible ; et
un module de détermination de risque (606) configuré pour déterminer un risque d'occurrence d'un défaut dans le pilote cible sur la base du premier indice et du second indice.

6. Appareil selon la revendication 5, dans lequel l'obtention du second indice comprend :
pour chacun d'une pluralité de pilotes incluant le pilote cible, la détermination de l'état suivant du pilote pendant une période :
une durée de fonctionnement pendant laquelle le pilote est en fonctionnement,
une durée de vie prévue pendant laquelle le pilote doit être utilisé,
la détermination d'un temps d'arrêt moyen pendant lequel la pluralité de pilotes sont hors service ; et
la génération du second indice à partir du temps de fonctionnement, de la durée de vie prévue et du temps d'arrêt moyen, la génération du second indice comprenant :
la détermination d'une seconde entropie sur la base de la durée de fonctionnement et du temps d'arrêt moyen, la seconde entropie indiquant un niveau d'incertitude de survenue du défaut en fonction des informations de maintenance ;
la détermination d'une seconde proportion sur la base de la durée de fonctionnement et de la durée de vie prévue ; et
la génération du second indice sur la base de la seconde entropie et de la seconde proportion.

7. Appareil selon la revendication 5, comprenant :
un module de détermination d'état (608) configuré pour déterminer un état du pilote cible sur la base du risque selon un modèle de réseau neuronal, l'état étant sélectionné dans un groupe constitué des état suivants :
normal, tolérable ou anormal.

8. Dispositif de stockage lisible par ordinateur ayant des instructions destinées à être exécutées par un processeur d'un ordinateur pour amener le processeur à exécuter un procédé selon la revendication 1.

9. Produit programme informatique comprenant une ou plusieurs instructions informatiques, dans lequel lorsque la ou les instructions informatiques sont exécutées par un processeur, le processeur est amené à exécuter un procédé selon la revendication 1.
